# EUROPÄISCHE PATENTSCHRIFT

(11) **EP 2 832 811 B1**
(45) Veröffentlichungstag und Bekanntmachung des Hinweises auf die Patenterteilung: **20.03.2024**
(21) Anmeldenummer: 14179533.6
(22) Anmeldetag: 01.08.2014
(51) Int. Cl.: C09J 133/06, C08L 53/02

(54) **Haftklebemasse**
Adhesive mass
Masse adhésive

(30) Priorität: 02.08.2013 DE 102013215297
(43) Veröffentlichungstag der Anmeldung: 04.02.2015
(73) Patentinhaber: tesa SE, 22848 Norderstedt (DE)
(72) Erfinder: Brix, Rolf, 24640 Schmalfeld (DE); Dollase, Thilo, 22397 Hamburg (DE); Mayer, Michael, 22299 Hamburg (DE); Petersen, Anika, 24576 Bimöhlen (DE)
(74) Vertreter: tesa SE

(56) Entgegenhaltungen:
- WO-A1-00/06637
- WO-A1-01/59024
- WO-A1-97/23249
- WO-A1-2014/026668
- DE-A1-102008 062 368
- US-A- 4 243 500
- US-B1- 6 503 621
- Tong J D ET AL: "Morphology and rheology of poly(methyl methacrylate)-block-poly(isooctyl acrylate)-blockpoly(methyl methacrylate) triblock copolymers, and potential as thermoplastic elastomers", Macromol. Chem. Phys., vol. 201, 10 August 2000 (2000-08-10), pages 1250-1258, XP093040962,

## Beschreibung

Die Erfindung betrifft das technische Gebiet der Haftklebemassen, wie sie in Klebebändern eingesetzt werden. Insbesondere schlägt die Erfindung eine Haftklebemasse auf Basis von Polyacrylat und Synthesekautschuk sowie eines bestimmten Tackifiers vor.

In vielen Technologiebereichen werden zunehmend Klebebänder zur Verbindung von Bauteilen eingesetzt. Häufig ist es wichtig, dass die derart erzeugten Materialverbunde auch dann in gleichbleibender Qualität erhalten bleiben, wenn sie extremeren Temperaturen ausgesetzt werden. Die Temperatureinflüsse umfassen dabei sowohl Hitze als auch Kälte. So ist es denkbar, dass auf den Oberflächen von Autos angebrachte Verklebungen, beispielsweise von Zierleisten oder Markensymbolen, winterlichen Frosttemperaturen ebenso standhalten müssen wie sommerlicher Hitze.

Gerade im Falle von Verklebungen auf den Oberflächen von Autos tritt eine weitere Schwierigkeit auf, die aus der unpolaren Natur von Automobiloberflächen resultiert. Bekanntlich sind hohe Verklebungsfestigkeiten auf unpolaren Untergründen, beispielsweise auf Polyethylen- oder Polypropylenoberflächen, häufig gar nicht oder nur sehr schwierig zu realisieren. Im Stand der Technik werden zu diesem Zweck oft Klebstoffzusammensetzungen eingesetzt, die auf Polymergemischen basieren.

US 4,107,233 A beschreibt eine Verbesserung der Adhäsion und der Bedruckbarkeit zu bzw. von Styrol-Butadien-Copolymeren (SBC) durch Zusatz von Polyacrylat.

EP 0 349 216 A1 offenbart eine Verbesserung der Kälteschlagfestigkeit von Polyacrylat-Haftklebemassen durch den Zusatz von SBC, wobei 95 bis 65 Teile Polyacrylat mit 5 bis 35 Teilen SBC abgemischt werden.

EP 0 352 901 A1 betrifft Haftklebemassen, die 60 bis 95 Teile eines UV-polymerisierten Polyacrylats und 35 bis 5 Teile eines Synthesekautschuks enthalten. Durch diese Rezeptierung werden die Kaltschlagfestigkeit und die Verklebung auf Farben verbessert.

EP 0 437 068 A2 offenbart zelluläre haftklebrige Membranen basierend auf Polyacrylat/SBC-Blends mit verbesserter Kälteschlagfestigkeit.

In WO 95/19393 A1 ist ein Blend aus einem mit einer Carboxylgruppe modifizierten Styrol-Blockcopolymer und einem zumindest eine Stickstoff-haltige Monomersorte enthaltenden Polyacrylat beschrieben. Ein Ziel dieser Technologie ist die Verbesserung der Klebeeigenschaften auf niedrigenergetischen Untergründen.

WO 2008/070386 A1 beschreibt Polymerblends, die mindestens 92 Teile einer SBCbasierten Klebmasse und bis zu 10 Teile einer Polyacrylat-Komponente enthalten.

WO 2000/006637 A1 offenbart Blends aus Polyacrylaten und SBC als Basis geschäumter Klebmasseschichten.

Die DE 10 2008 062368 A1 offenbart Haftklebemassen auf Basis von Naturkautschuk und Polyacrylaten. Die WO 97/23249 A1 offenbart drucksensitive Klebemassen für medizinische Anwendungen, die eine Mischung aus einer Acrylatklebemasse mit einem Elastomer und einem Tackifier. Die US 4243500 A offenbart die Herstellung von Klebemassen durch radikalische Polymerisation von Acrylatmonomeren in der Gegenwart von Tackifiern und Elastomeren, die in dem Monomer gelöst sind. Weiterer Stand der Technik ist in der WO 01/59024 A1 und der WO 2014/026668 A1 offenbart.

Es besteht trotz des im Stand der Technik dokumentierten vorangeschrittenen Erkenntnisgewinns ein anhaltender Bedarf an Haftklebemassen mit ausgeprägter Leistungsfähigkeit in einem möglichst weiten Temperaturintervall, das sowohl den Tief- als auch den Hochtemperaturbereich umfasst.

Aufgabe der Erfindung ist es daher, eine Haftklebemasse mit guter Klebleistung in einem Temperaturbereich von -30 °C bis 70 °C und insbesondere auch bei Raumtemperatur zur Verfügung zu stellen.

Der Lösung der Aufgabe liegt der Gedanke zugrunde, als Basis der Haftklebemasse ein Gemisch aus Polyacrylat und Synthesekautschuk sowie einem mit dem Polyacrylat verträglichen Tackifier zu verwenden. Ein erster Gegenstand der Erfindung ist daher eine Haftklebemasse, die
a) 40 - 70 Gew.-%, bezogen auf das Gesamtgewicht der Haftklebemasse, mindestens eines Poly(meth)acrylats;
b) 15 - 50 Gew.-%, bezogen auf das Gesamtgewicht der Haftklebemasse, mindestens eines Synthesekautschuks; und
c) mindestens einen mit dem/den Poly(meth)acrylat(en) verträglichen Tackifier enthält und die dadurch gekennzeichnet ist, dass die Haftklebemasse geschäumt ist, dass das mindestens eine Poly(meth)acrylat eine Glasübergangstemperatur (DSC) zwischen -20 und -50 °C aufweist, wobei die Glasübergangtemperatur des Poly(meth)acrylats wie weiter unten beschrieben gemessen wird,
dass der Synthesekautschuk ein Blockcopolymer mit einem Aufbau A-B, A-B-A, (A-B)ₙ, (AB)ₙX oder (A-B-A)ₙX ist, worin
- die Blöcke A unabhängig voneinander für ein Polymer, gebildet durch Polymerisation mindestens eines Vinylaromaten;
- die Blöcke B unabhängig voneinander für ein Polymer, gebildet durch Polymerisation von konjugierten Dienen mit 4 bis 18 C-Atomen und/oder Isobutylen, oder für ein teil- oder vollhydriertes Derivat eines solchen Polymers;
- X für den Rest eines Kopplungsreagenzes oder Initiators und
- n für eine ganze Zahl ≥ 2 stehen, und

dass die Blöcke A glasartige Blöcke mit einer Glasübergangstemperatur (DSC) sind, die bei mindestens 80 °C liegt;
dass die Monomere zur Herstellung des Poly(meth)acrylats anteilig funktionelle Gruppen enthalten, die geeignet sind, mit Epoxidgruppen Verknüpfungsreaktionen einzugehen und das Poly(meth)acrylat mittels einer oder mehrerer epoxidgruppenhaltiger Substanzen vernetzt ist.

Eine derartige Haftklebemasse zeigt sehr gute Klebkraft sowohl bei Raumtemperatur als auch bei -30 °C und bei 70 °C, wie durch statische bzw. dynamische Tests gezeigt werden konnte.

Unter einer "Haftklebemasse" wird entsprechend dem allgemeinen Verständnis des Fachmanns ein viskoelastischer Klebstoff verstanden, dessen abgebundener, trockener Film bei Raumtemperatur permanent klebrig ist und klebfähig bleibt sowie durch leichten Anpressdruck auf einer Vielzahl von Substraten verklebt werden kann.

Unter einem "Poly(meth)acrylat" wird ein Polymer verstanden, dessen Monomerbasis zu mindestens 60 Gew.-% aus Acrylsäure, Methacrylsäure, Acrylsäureestern und/oder Methacrylsäureestern besteht, wobei Acrylsäureester und/oder Methacrylsäureester zumindest anteilig, bevorzugt zu mindestens 50 Gew.-%, bezogen auf die gesamte Monomerbasis des betreffenden Polymers, enthalten sind. Insbesondere wird unter einem "Poly(meth)acrylat" ein Polymerisat verstanden, welches durch radikalische Polymerisation von Acryl- und/oder Methacrylmonomeren sowie gegebenenfalls weiteren, copolymerisierbaren Monomeren erhältlich ist.

Erfindungsgemäß ist das Poly(meth)acrylat bzw. sind Poly(meth)acrylate zu 40 bis 70 Gew.-%, bezogen auf das Gesamtgewicht der Haftklebemasse, enthalten. Bevorzugt enthält die erfindungsgemäße Haftklebemasse 45 bis 60 Gew.-%, bezogen auf das Gesamtgewicht der Haftklebemasse, mindestens eines Poly(meth)acrylats.

Die Glasübergangstemperatur der erfindungsgemäß einsetzbaren Poly(meth)acrylate beträgt < 0 °C, nämlich zwischen -20 und -50 °C. Die Glasübergangstemperatur von Polymeren oder von Polymerblöcken in Blockcopolymeren wird im Rahmen dieser Erfindung mittels dynamischer Scanning Kalorimetrie (DSC) bestimmt. Dazu werden ca. 5 mg einer unbehandelten Polymerprobe in ein Aluminiumtiegelchen (Volumen 25 µL) eingewogen und mit einem gelochten Deckel verschlossen. Zur Messung wird ein DSC 204 F1 der Firma Netzsch verwendet. Es wird zwecks Inertisierung unter Stickstoff gearbeitet. Die Probe wird zunächst auf -150 °C abgekühlt, dann mit einer Heizrate von 10 K/min bis +150 °C aufgeheizt und erneut auf -150 °C abgekühlt. Die sich anschließende zweite Heizkurve wird erneut bei 10 K/min gefahren und die Änderung der Wärmekapazität aufgenommen. Glasübergänge werden als Stufen im Thermogramm erkannt.

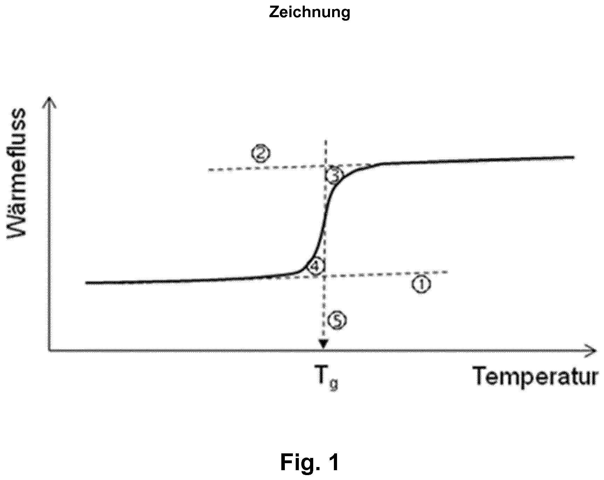

Die Glasübergangstemperatur wird folgendermaßen erhalten (siehe Figur 1):
Der jeweils linear verlaufende Bereich der Messkurve vor und nach der Stufe wird in Richtung steigender (Bereich vor der Stufe) bzw. fallender (Bereich nach der Stufe) Temperaturen verlängert. Im Bereich der Stufe wird eine Ausgleichsgerade ⑤ parallel zur Ordinate so gelegt, dass sie die beiden Verlängerungslinien schneidet, und zwar so, dass zwei Flächen ③ und ④ (zwischen der jeweils einen Verlängerungslinie, der Ausgleichsgeraden und der Messkurve) gleichen Inhalts entstehen. Der Schnittpunkt der so positionierten Ausgleichsgeraden mit der Messkurve ergibt die Glasübergangstemperatur.

Die Poly(meth)acrylate der erfindungsgemäßen Haftklebemasse sind erhältlich durch zumindest anteiliges Einpolymerisieren von funktionellen, mit Epoxidgruppen vernetzungsfähigen Monomeren. Besonders bevorzugt handelt es sich dabei um Monomere mit Säuregruppen (besonders Carbonsäure-, Sulfonsäure oder Phosphonsäuregruppen) und/oder Hydroxygruppen und/oder Säureanhydridgruppen und/oder Epoxidgruppen und/oder Amingruppen; insbesondere bevorzugt sind carbonsäuregruppenhaltige Monomere. Es ist ganz besonders vorteilhaft, wenn das Polyacrylat einpolymerisierte Acrylsäure und/oder Methacrylsäure aufweist. All diese Gruppen weisen eine Vernetzungsfähigkeit mit Epoxidgruppen auf, wodurch das Polyacrylat vorteilhaft einer thermischen Vernetzung mit eingebrachten Epoxiden zugänglich wird.

Weitere Monomere, die als Comonomere für die Poly(meth)acrylate verwendet werden können, sind neben Acrylsäure- und/oder Methacrylsäureestern mit bis zu 30 C-Atomen pro Molekül beispielsweise Vinylester von bis zu 20 C-Atome enthaltenden Carbonsäuren, Vinylaromaten mit bis zu 20 C-Atomen, ethylenisch ungesättigte Nitrile, Vinylhalogenide, Vinylether von 1 bis 10 C-Atome enthaltenden Alkoholen, aliphatische Kohlenwasserstoffe mit 2 bis 8 C-Atomen und einer oder zwei Doppelbindungen oder Mischungen dieser Monomere.

Die Eigenschaften des betreffenden Poly(meth)acrylats lassen sich insbesondere über eine Variation der Glasübergangstemperatur des Polymers durch unterschiedliche Gewichtsanteile der einzelnen Monomere beeinflussen. Das beziehungsweise die Poly(meth)acrylat(e) der Erfindung können vorzugsweise auf die folgende Monomerzusammensetzung zurückgeführt werden:
a) Acrylsäureester und/oder Methacrylsäureester der folgenden Formel

   CH₂ = C(R^{I})(COOR^{II})

   wobei R^{I} = H oder CH₃ und R^{II} ein Alkylrest mit 4 bis 14 C-Atomen ist,
b) olefinisch ungesättigte Monomere mit funktionellen Gruppen der für eine Reaktivität mit Epoxidgruppen bereits definierten Art,
c) optional weitere Acrylate und/oder Methacrylate und/oder olefinisch ungesättigte Monomere, die mit der Komponente (a) copolymerisierbar sind.

Die Anteile der entsprechenden Komponenten (a), (b), und (c) werden derart gewählt, dass das Polymerisationsprodukt eine Glasübergangstemperatur zwischen -20 und -50 °C (DSC) aufweist. Es ist besonders vorteilhaft, die Monomere der Komponente (a) mit einem Anteil von 45 bis 99 Gew.-%, die Monomere der Komponente (b) mit einem Anteil von 1 bis 15 Gew.-% und die Monomere der Komponente (c) mit einem Anteil von 0 bis 40 Gew.-% zu wählen (die Angaben sind bezogen auf die Monomermischung für das "Basispolymer", also ohne Zusätze eventueller Additive zu dem fertigen Polymer, wie Harze etc).

Die Monomere der Komponente (a) sind insbesondere weichmachende und/oder unpolare Monomere. Vorzugsweise werden als Monomere (a) Acryl- und Methacrylsäureester mit Alkylgruppen bestehend aus 4 bis 14 C-Atomen, besonders bevorzugt 4 bis 9 C-Atomen, eingesetzt. Beispiele für derartige Monomere sind n-Butylacrylat, n-Butylmethacrylat, n-Pentylacrylat, n-Pentylmethacrylat, n-Amylacrylat, n-Hexylacrylat, n-Hexylmethacrylat, n-Heptylacrylat, n-Octylacrylat, n-Octylmethacrylat, n-Nonylacrylat und deren verzweigte Isomere, wie zum Beispiel Isobutylacrylat, Isooctylacrylat, Isooctylmethacrylat, 2-Ethylhexylacrylat oder 2-Ethylhexylmethacrylat.

Die Monomere der Komponente (b) sind olefinisch ungesättigte Monomere mit funktionellen Gruppen, die eine Reaktion mit Epoxidgruppen eingehen können.

Bevorzugt werden für die Komponente (b) Monomere mit funktionellen Gruppen eingesetzt, die ausgewählt sind aus der Gruppe umfassend: Hydroxy-, Carboxy-, Sulfonsäure- oder Phosphonsäuregruppen, Säureanhydride, Epoxide, Amine.

Besonders bevorzugte Beispiele für Monomere der Komponente (b) sind Acrylsäure, Methacrylsäure, Itaconsäure, Maleinsäure, Fumarsäure, Crotonsäure, Aconitsäure, Dimethylacrylsäure, β-Acryloyloxypropionsäure, Trichloracrylsäure, Vinylessigsäure, Vinylphosphonsäure, Maleinsäureanhydrid, Hydroxyethylacrylat, insbesondere 2-Hydroxyethylacrylat, Hydroxypropylacrylat, insbesondere 3-Hydroxypropylacrylat, Hydroxybutylacrylat, insbesondere 4-Hydroxybutylacrylat, Hydroxyhexylacrylat, insbesondere 6-Hydroxyhexylacrylat, Hydroxyethylmethacrylat, insbesondere 2-Hydroxyethylmethacrylat, Hydroxypropylmethacrylat, insbesondere 3-Hydroxypropylmethacrylat, Hydroxybutylmethacrylat, insbesondere 4-Hydroxybutylmethacrylat, Hydroxyhexylmethacrylat, insbesondere 6-Hydroxyhexylmethacrylat, Allylalkohol, Glycidylacrylat, Glycidylmethacrylat.

Prinzipiell können als Komponente (c) alle vinylisch funktionalisierten Verbindungen eingesetzt werden, die mit der Komponente (a) und/oder der Komponente (b) copolymerisierbar sind. Die Monomere der Komponente (c) können zur Einstellung der Eigenschaften der resultierenden Haftklebemasse dienen.

Beispielhafte Monomere der Komponente (c) sind:
Methylacrylat, Ethylacrylat, Propylacrylat, Methylmethacrylat, Ethylmethacrylat, Benzylacrylat, Benzylmethacrylat, *sec*-Butylacrylat, *tert*-Butylacrylat, Phenylacrylat, Phenylmethacrylat, Isobornylacrylat, Isobornylmethacrylat, *tert*-Butylphenylacrylat, *tert-*Butylaphenylmethacrylat, Dodecylmethacrylat, Isodecylacrylat, Laurylacrylat, n-Undecylacrylat, Stearylacrylat, Tridecylacrylat, Behenylacrylat, Cyclohexylmethacrylat, Cyclopentylmethacrylat, Phenoxyethylacrlylat, Phenoxyethylmethacrylat, 2-Butoxyethylmethacrylat, 2-Butoxyethylacrylat, 3,3,5-Trimethylcyclohexylacrylat, 3,5-Dimethyladamantylacrylat, 4-Cumylphenylmethacrylat, Cyanoethylacrylat, Cyanoethylmethacrylat, 4-Biphenylacrylat, 4-Biphenylmethacrylat, 2-Naphthylacrylat, 2-Naphthylmethacrylat, Tetrahydrofufurylacrylat, Diethylaminoethylacrylat, Diethylaminoethylmethacrylat, Dimethylaminoethylacrylat, Dimethylaminoethylmethacrylat, 2-Butoxyethylacrylat, 2-Butoxyethylmethacrylat, 3-Methoxyacrylsäuremethylester, 3-Methoxybutylacrylat, Phenoxyethylacrlylat, Phenoxyethylmethacrylat, 2-Phenoxyethylmethacrylat, Butyldiglykolmethacrylat, Ethylenglycolacrylat, Ethylenglycolmonomethylacrylat, Methoxy Polyethylenglykolmethacrylat 350, Methoxy Polyethylenglykolmethacrylat 500, Propylenglycolmonomethacrylat, Butoxydiethylenglykolmethacrylat, Ethoxytriethylenglykolmethacrylat, Octafluoropentylacrylat, Octafluoropentylmethacrylat, 2,2,2-Trifluoroethylmethacrylat, 1,1,1,3,3,3-Hexafluoroisopropylacrylat, 1,1,1,3,3,3-Hexafluoroisopropylmethacrylat, 2,2,3,3,3-Pentafluoropropylmethacrylat, 2,2,3,4,4,4-Hexafluorobutylmethacrylat, 2,2,3,3,4,4,4-Heptafluorobutylacrylat, 2,2,3,3,4,4,4-Heptafluorobutylmethacrylat, 2,2,3,3,4,4,5,5,6,6,7,7,8,8,8-Pentadecafluorooctylmethacrylat, Dimethylaminopropylacrylamid, Dimethylaminopropylmethacrylamid, *N*-(1-Methylundecyl)acrylamid, *N*-(n-Butoxymethyl)acrylamid, *N*-(Butoxymethyl)methacrylamid, *N*-(Ethoxymethyl)acrylamid, *N*-(n-Octadecyl)acrylamid, weiterhin *N,N*-Dialkyl-substituierte Amide, wie beispielsweise *N,N*-Dimethylacrylamid, *N,N*-Dimethylmethacrylamid, *N-*Benzylacrylamide, *N*-Isopropylacrylamid, *N*-*tert*-Butylacrylamid, *N*-*tert*-Octylacrylamid, *N-*Methylolacrylamid, *N*-Methylolmethacrylamid, Acrylnitril, Methacrylnitril, Vinylether, wie Vinylmethylether, Ethylvinylether, Vinylisobutylether, Vinylester, wie Vinylacetat, Vinylchlorid, Vinylhalogenide, Vinylidenchlorid, Vinylidenhalogenide, Vinylpyridin, 4-Vinylpyridin, *N*-Vinylphthalimid, *N*-Vinyllactam, *N*-Vinylpyrrolidon, Styrol, α- und p-Methylstyrol, α-Butylstyrol, 4-n-Butylstyrol, 4-n-Decylstyrol, 3,4-Dimethoxystyrol. Makromonomere wie 2-Polystyrolethylmethacrylat (gewichtsmittleres Molekulargewicht Mw, bestimmt mittels GPC, von 4000 bis 13000 g/mol), Poly(methylmethacrylat)ethylmethacrylat (Mw von 2000 bis 8000 g/mol).

Monomere der Komponente (c) können vorteilhaft auch derart gewählt werden, dass sie funktionelle Gruppen enthalten, die eine nachfolgende strahlenchemische Vernetzung (beispielsweise durch Elektronenstrahlen, UV) unterstützen. Geeignete copolymerisierbare Photoinitiatoren sind zum Beispiel Benzoinacrylat und acrylatfunktionalisierte Benzophenonderivate. Monomere, die eine Vernetzung durch Elektronenbestrahlung unterstützen, sind zum Beispiel Tetrahydrofurfurylacrylat, N*-tert-*Butylacrylamid und Allylacrylat.

Die Herstellung der Polyacrylate ("Polyacrylate" wird im Rahmen der Erfindung als synonym mit "Poly(meth)acrylate" verstanden) kann nach dem Fachmann geläufigen Verfahren geschehen, insbesondere vorteilhaft durch konventionelle radikalische Polymerisationen oder kontrollierte radikalische Polymerisationen. Die Polyacrylate können durch Copolymerisation der monomeren Komponenten unter Verwendung der üblichen Polymerisationsinitiatoren sowie gegebenenfalls von Reglern hergestellt werden, wobei bei den üblichen Temperaturen in Substanz, in Emulsion, zum Beispiel in Wasser oder flüssigen Kohlenwasserstoffen, oder in Lösung polymerisiert wird.

Vorzugsweise werden die Polyacrylate durch Polymerisation der Monomere in Lösungsmitteln, insbesondere in Lösungsmitteln mit einem Siedebereich von 50 bis 150 °C, bevorzugt von 60 bis 120 °C unter Verwendung der üblichen Mengen an Polymerisationsinitiatoren, die im allgemeinen bei 0,01 bis 5, insbesondere bei 0,1 bis 2 Gew.-% (bezogen auf das Gesamtgewicht der Monomeren) liegen, hergestellt.

Prinzipiell eignen sich alle dem Fachmann geläufigen, üblichen Initiatoren. Beispiele für Radikalquellen sind Peroxide, Hydroperoxide und Azoverbindungen, zum Beispiel Dibenzoylperoxid, Cumolhydroperoxid, Cyclohexanonperoxid, Di-*t*-butylperoxid, Cyclohexylsulfonylacetylperoxid, Diisopropylpercarbonat, *t*-Butylperoktoat, Benzpinacol. In einer sehr bevorzugten Vorgehensweise wird als radikalischer Initiator 2,2'-Azobis(2-methylbutyronitril) (Vazo^{®} 67^{™} der Firma DuPont) oder 2,2'-Azobis(2-methylpropionitril) (2,2'-Azobisisobutyronitril; AIBN; Vazo^{®} 64^{™} der Firma DuPont) verwendet.

Als Lösungsmittel für die Herstellung der Poly(meth)acrylate kommen Alkohole wie Methanol, Ethanol, n- und iso-Propanol, n- und iso-Butanol, vorzugsweise Isopropanol und/oder Isobutanol, sowie Kohlenwasserstoffe wie Toluol und insbesondere Benzine eines Siedebereichs von 60 bis 120 °C in Frage. Ferner können Ketone wie vorzugsweise Aceton, Methylethylketon, Methylisobutylketon und Ester wie Essigsäureethylester sowie Gemische von Lösungsmitteln der genannten Art eingesetzt werden, wobei Gemische, die Isopropanol, insbesondere in Mengen von 2 bis 15 Gew.-%, bevorzugt 3 bis 10 Gew.-%, bezogen auf das eingesetzte Lösungsmittelgemisch, enthalten, vorgezogen werden.

Bevorzugt erfolgt nach der Herstellung (Polymerisation) der Polyacrylate eine Aufkonzentration, und die weitere Verarbeitung der Polyacrylate erfolgt im Wesentlichen lösemittelfrei. Die Aufkonzentration des Polymerisats kann in Abwesenheit von Vernetzer- und Beschleunigersubstanzen geschehen. Es ist aber auch möglich, eine dieser Verbindungsklassen dem Polymerisat bereits vor der Aufkonzentration zuzusetzen, so dass die Aufkonzentration dann in Gegenwart dieser Substanz(en) erfolgt.

Die Polymerisate können nach dem Aufkonzentrationsschritt in einen Compounder überführt werden. Gegebenenfalls können die Aufkonzentration und die Compoundierung auch im selben Reaktor stattfinden.

Die gewichtsmittleren Molekulargewichte M_{W} der Polyacrylate liegen bevorzugt in einem Bereich von 20.000 bis 2.000.000 g/mol; sehr bevorzugt in einem Bereich von 100.000 bis 1.500.000 g/mol, äußerst bevorzugt in einem Bereich von 150.000 bis 1.000.000 g/mol. Die Angaben des mittleren Molekulargewichtes M_{W} und der Polydisperistät PD in dieser Schrift beziehen sich auf die Bestimmung per Gelpermeationschromatographie. Dazu kann es vorteilhaft sein, die Polymerisation in Gegenwart geeigneter Polymerisationsregler wie Thiole, Halogenverbindungen und/oder Alkohole durchzuführen, um das gewünschte mittlere Molekulargewicht einzustellen.

Die Angaben der zahlenmittleren Molmasse Mn und der gewichtsmittleren Molmasse Mw in dieser Schrift beziehen sich auf die Bestimmung per Gelpermeationschromatographie (GPC). Die Bestimmung erfolgt an 100 µl klarfiltrierter Probe (Probenkonzentration 4 g/l). Als Eluent wird Tetrahydrofuran mit 0,1 Vol.-% Trifluoressigsäure eingesetzt. Die Messung erfolgt bei 25 °C.

Als Vorsäule wird eine Säule Typ PSS-SDV, 5 µm, 10³ Å, 8,0 mm * 50 mm (Angaben hier und im Folgenden in der Reihenfolge: Typ, Partikelgrösse, Porosität, Innendurchmesser * Länge; 1 Å = 10⁻¹⁰ m) verwendet. Zur Auftrennung wird eine Kombination der Säulen des Typs PSS-SDV, 5 µm, 10³ Å sowie 10⁵ Å und 10⁶ Å mit jeweils 8,0 mm * 300 mm eingesetzt (Säulen der Firma Polymer Standards Service; Detektion mittels Differentialrefraktometer Shodex RI71). Die Durchflussmenge beträgt 1,0 ml pro Minute. Die Kalibrierung erfolgt bei Polyacrylaten gegen PMMA-Standards (Polymethylmethacrylat-Kalibrierung) und sonst (Harze, Elastomere) gegen PS-Standards (Polystyrol-Kalibrierung).

Die Polyacrylate haben vorzugsweise einen K-Wert von 30 bis 90, besonders bevorzugt von 40 bis 70, gemessen in Toluol (1%ige Lösung, 21 °C). Der K-Wert nach Fikentscher ist ein Maß für das Molekulargewicht und die Viskosität des Polymerisats.

Das Prinzip der Methode beruht auf der kapillarviskosimetrischen Bestimmung der relativen Lösungsviskosität. Hierzu wird die Testsubstanz in Toluol durch dreißigminütiges Schütteln aufgelöst, so dass man eine 1 %-ige Lösung erhält. In einem Vogel-Ossag-Viskosimeter wird bei 25 °C die Auslaufzeit gemessen und daraus in Bezug auf die Viskosität des reinen Lösungsmittels die relative Viskosität der Probenlösung bestimmt. Aus Tabellen kann nach Fikentscher [P. E. Hinkamp, Polymer, 1967, 8, 381] der K-Wert abgelesen werden (K = 1000 k).

Erfindungsgemäß besonders geeignet sind Polyacrylate, die eine enge Molekulargewichtsverteilung (Polydispersität PD < 4) haben. Diese Massen haben trotz eines relativ niedrigen Molekulargewichts nach dem Vernetzen eine besonders gute Scherfestigkeit. Zudem ermöglicht die niedrigere Polydispersität eine leichtere Verarbeitung aus der Schmelze, da die Fließviskosität gegenüber einem breiter verteilten Polyacrylat bei weitgehend gleichen Anwendungseigenschaften geringer ist. Eng verteilte Poly(meth)acrylate können vorteilhaft durch anionische Polymerisation oder durch kontrollierte radikalische Polymerisationsmethoden hergestellt werden, wobei letzteres besonders gut geeignet ist. Auch über *N*-Oxyle lassen sich entsprechende Polyacrylate herstellen. Ferner lässt sich in vorteilhafter Weise die Atom Transfer Radical Polymerization (ATRP) zur Synthese eng verteilter Polyacrylate einsetzen, wobei als Initiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Ag- oder Au-Komplexe eingesetzt werden.

Die Monomere zur Herstellung der Poly(meth)acrylate enthalten anteilig funktionelle Gruppen, die geeignet sind, mit Epoxidgruppen Verknüpfungsreaktionen einzugehen. Dies ermöglicht vorteilhaft eine thermische Vernetzung der Polyacrylate durch Reaktion mit Epoxiden. Unter Verknüpfungsreaktionen werden insbesondere Additions- und Substitutionsreaktionen verstanden. Es kommt also zu einer Verknüpfung der die funktionellen Gruppen tragenden Bausteine mit Epoxidgruppen tragenden Bausteinen im Sinne einer Vernetzung der die funktionellen Gruppen tragenden Polymerbausteine über Epoxidgruppen tragende Vernetzermoleküle als Verknüpfungsbrücken. Bei den epoxidgruppenhaltigen Substanzen handelt es sich bevorzugt um multifunktionelle Epoxide, also solche mit mindestens zwei Epoxidgruppen; entsprechend kommt es bevorzugt insgesamt zu einer mittelbaren Verknüpfung der die funktionellen Gruppen tragenden Bausteine.

Die Poly(meth)acrylate Haftklebemasse können durch Verknüpfungsreaktionen - insbesondere im Sinne von Additions- oder Substitutionsreaktionen - von in ihnen enthaltenen funktionellen Gruppen mit thermischen Vernetzern vernetzt, und erfindungsgemäß sind die Poly(methyl)acrylate der Haftklebstoffmasse mittels einer oder mehrerer epoxidgruppenhaltigen Substanz(en) vernetzt.

Bevorzugt werden thermische Vernetzer zu 0,1 bis 5 Gew.-%, insbesondere zu 0,2 bis 1 Gew.-%, bezogen auf die Gesamtmenge des zu vernetzenden Polymers, eingesetzt. Erfindungsgemäß sind die Poly(meth)acrylate der erfindungsgemäßen Haftklebemasse mittels einer oder mehrerer epoxidgruppenhaltigen Substanz(en) vernetzt. Bei den epoxidgruppenhaltigen Substanzen handelt es sich insbesondere um multifunktionelle Epoxide, also solche mit zumindest zwei Epoxidgruppen; entsprechend kommt es insgesamt zu einer mittelbaren Verknüpfung der die funktionellen Gruppen tragenden Bausteine der Poly(meth)acrylate. Die epoxidgruppenhaltigen Substanzen können sowohl aromatische als auch aliphatische Verbindungen sein.

Hervorragend geeignete multifunktionelle Epoxide sind Oligomere des Epichlorhydrins, Epoxyether mehrwertiger Alkohole (insbesondere Ethylen-, Propylen-, und Butylenglycole, Polyglycole, Thiodiglycole, Glycerin, Pentaerythrit, Sorbit, Polyvinylalkohol, Polyallylalkohol und ähnliche), Epoxyether mehrwertiger Phenole [insbesondere Resorcin, Hydrochinon, Bis-(4-hydroxyphenyl)-methan, Bis-(4-hydroxy-3-methylphenyl)-methan, Bis-(4-hydroxy-3,5-dibromphenyl)-methan, Bis-(4-hydroxy-3,5-difluorphenyl)-methan, 1,1-Bis-(4-hydroxyphenyl)ethan, 2,2-Bis-(4-hydroxyphenyl)propan, 2,2-Bis-(4-hydroxy-3-methylphenyl)-propan, 2,2-Bis-(4-hydroxy-3-chlorphenyl)-propan, 2,2-Bis-(4-hydroxy-3,5-dichlorphenyl)-propan, 2,2-Bis-(4-hydroxy-3,5-dichlorphenyl)-propan, Bis-(4-hydroxyphenyl)-phenylmethan, Bis-(4-hydroxyphenyl)-phenylmethan, Bis-(4-hydroxyphenyl)diphenylmethan, Bis (4-hydroxyphenyl)-4'-methylphenylmethan, 1,1-Bis-(4-hydroxyphenyl)-2,2,2-trichlorethan, Bis-(4-hydroxyphenyl)-(4-chlorphenyl)-methan, 1,1-Bis-(4-hydroxyphenyl)-cyclohexan, Bis-(4-hydroxyphenyl)-cyclohexylmethan, 4,4'-Dihydroxydiphenyl, 2,2'-Dihydroxydiphenyl, 4,4'-Dihydroxydiphenylsulfon] sowie deren Hydroxyethylether, Phenol-Formaldehyd-Kondensationsprodukte, wie Phenolalkohole, Phenolaldehydharze und ähnliche, S- und N-haltige Epoxide (zum Beispiel N,N-Diglycidylanilin, N,N'-Dimethyldiglycidyl-4,4-Diaminodiphenylmethan) sowie Epoxide, welche nach üblichen Verfahren aus mehrfach ungesättigten Carbonsäuren oder einfach ungesättigten Carbonsäureestern ungesättigter Alkohole hergestellt worden sind, Glycidylester, Polyglycidylester, die durch Polymerisation oder Mischpolymerisation von Glycidylestern ungesättigter Säuren gewonnen werden können oder aus anderen sauren Verbindungen (Cyanursäure, Diglycidylsulfid, cyclischem Trimethylentrisulfon bzw. dessen Derivaten und anderen) erhältlich sind.

Sehr geeignete Ether sind beispielsweise 1,4-Butandioldiglycidether, Polyglycerol-3-glycidether, Cyclohexandimethanoldiglycidether, Glycerintriglycidether, Neopentylglykoldiglycidether, Pentaerythrittetraglycidether, 1,6-Hexandioldiglycidether, Polypropylenglykoldiglycidether, Trimethylolpropantriglycidether, Pentaerythrittetraglycidether, Bisphenol-A-diglycidether und Bisphenol-F-diglycidether.

Besonders bevorzugt für die Poly(meth)acrylate als zu vernetzende Polymere ist die Verwendung eines beispielsweise in der EP 1 978 069 A1 beschriebenen Vernetzer-Beschleuniger-Systems ("Vernetzungssystem"), um eine bessere Kontrolle sowohl über die Verarbeitungszeit, Vernetzungskinetik sowie den Vernetzungsgrad zu erhalten. Das Vernetzer-Beschleuniger-System umfasst zumindest eine epoxidgruppenhaltige Substanz als Vernetzer und zumindest eine bei einer Temperatur unterhalb der Schmelztemperatur des zu vernetzenden Polymers für Vernetzungsreaktionen mittels epoxidgruppenhaltigen Verbindungen beschleunigend wirkende Substanz als Beschleuniger.

Als Beschleuniger werden erfindungsgemäß besonders bevorzugt Amine (formell als Substitutionsprodukte des Ammoniaks aufzufassen; in den folgenden Formeln sind diese Substituenten durch "R" dargestellt und umfassen insbesondere Alkyl- und/oder Arylreste und/oder andere organische Reste) eingesetzt, insbesondere bevorzugt solche Amine, die mit den Bausteinen der zu vernetzenden Polymere keine oder nur geringfügige Reaktionen eingehen.

Prinzipiell können als Beschleuniger sowohl primäre (NRH₂), sekundäre (NR₂H) als auch tertiäre Amine (NR₃) gewählt werden, selbstverständlich auch solche, die mehrere primäre und/oder sekundäre und/oder tertiäre Amingruppen aufweisen. Besonders bevorzugte Beschleuniger sind aber tertiäre Amine wie beispielweise Triethylamin, Triethylendiamin, Benzyldimethylamin, Dimethylamino-methylphenol, 2,4,6-Tris-(N,N-dimethylaminomethyl)-phenol, N,N'-Bis(3-(dimethyl-amino)propyl)harnstoff. Als Beschleuniger können vorteilhaft auch multifunktionelle Amine wie Diamine, Triamine und/oder Tetramine eingesetzt werden. Hervorragend geeignet sind zum Beispiel Diethylentriamin, Triethylentetramin, Trimethylhexamethylendiamin.

Als Beschleuniger werden darüber hinaus bevorzugt Aminoalkohole verwendet. Besonders bevorzugt werden sekundäre und/oder tertiäre Aminoalkohole eingesetzt, wobei im Falle mehrerer Aminfunktionalitäten pro Molekül bevorzugt mindestens eine, bevorzugt alle Aminfunktionalitäten sekundär und/oder tertiär sind. Als bevorzugte Aminoalkohol-Beschleuniger können Triethanolamin, N,N-Bis(2-hydroxypropyl)ethanolamin, N-Methyldiethanolamin, N-Ethyldiethanolamin, 2-Aminocyclohexanol, Bis(2-hydroxycyclohexyl)methylamin, 2-(Diisopropylamino)ethanol, 2-(Dibutylamino)ethanol, N-Butyldiethanolamin, N-Butylethanolamin, 2-[Bis(2-hydroxyethyl)amino]-2-(hydroxymethyl)-1,3-propandiol, 1-[Bis(2-hydroxyethyl)amino]-2-propanol, Triisopropanolamin, 2-(Dimethylamino)ethanol, 2-(Diethylamino)ethanol, 2-(2-Dimethylaminoethoxy)ethanol, N,N,N'-Trimethyl-N'-hydroxyethylbisaminoethylether, N,N,N'-Trimethylaminoethylethanolamin und/oder N,N,N'-Trimethylaminopropylethanolamin eingesetzt werden.

Weitere geeignete Beschleuniger sind Pyridin, Imidazole (wie beispielsweise 2-Methylimidazol) und 1,8-Diazabicyclo[5.4.0]undec-7-en. Auch cycloaliphatische Polyamine können als Beschleuniger eingesetzt werden. Geeignet sind auch Beschleuniger auf Phosphatbasis wie Phosphine und/oder Phosphoniumverbindungen, wie beispielsweise Triphenylphosphin oder Tetraphenylphosphoniumtetraphenylborat.

Die erfindungsgemäße Haftklebemasse enthält ferner mindestens einen Synthesekautschuk. Erfindungsgemäß ist der Synthesekautschuk bzw. sind Synthesekautschuke in der Haftklebemasse zu 15 bis 50 Gew.-%, bezogen auf das Gesamtgewicht der Haftklebemasse, enthalten. Bevorzugt enthält die Haftklebemasse 20 bis 40 Gew.-%, bezogen auf das Gesamtgewicht der Haftklebemasse, mindestens eines Synthesekautschuks.

Erfindungsgemäß ist mindestens ein Synthesekautschuk der erfindungsgemäßen Haftklebemasse ein Blockcopolymer mit einem Aufbau A-B, A-B-A, (A-B)ₙ, (A-B)ₙX oder

(A-B-A)ₙX,

worin
- die Blöcke A unabhängig voneinander für ein Polymer, gebildet durch Polymerisation mindestens eines Vinylaromaten;
- die Blöcke B unabhängig voneinander für ein Polymer, gebildet durch Polymerisation von konjugierten Dienen mit 4 bis 18 C-Atomen und/oder Isobutylen, oder für ein teil- oder vollhydriertes Derivat eines solchen Polymers;
- X für den Rest eines Kopplungsreagenzes oder Initiators und
- n für eine ganze Zahl ≥ 2 stehen.
Insbesondere sind alle Synthesekautschuke der erfindungsgemäßen Haftklebemasse Blockcopolymere mit einem Aufbau wie vorstehend dargelegt. Die erfindungsgemäße Haftklebemasse kann somit auch Gemische verschiedener Blockcopolymere mit einem Aufbau wie vorstehend enthalten.

Geeignete Blockcopolymere (Vinylaromatenblockcopolymere) umfassen also einen oder mehrere gummiartige Blöcke B (Weichblöcke) und einen oder mehrere glasartige Blöcke A (Hartblöcke). Besonders bevorzugt ist mindestens ein Synthesekautschuk der erfindungsgemäßen Haftklebemasse ein Blockcopolymer mit einem Aufbau A-B, A-B-A, (A-B)₃X oder (A-B)₄X, wobei für A, B und X die vorstehenden Bedeutungen gelten. Ganz besonders bevorzugt sind alle Synthesekautschuke der erfindungsgemäßen Haftklebemasse Blockcopolymere mit einem Aufbau A-B, A-B-A, (A-B)₃X oder (A-B)₄X, wobei für A, B und X die vorstehenden Bedeutungen gelten. Insbesondere ist der Synthesekautschuk der erfindungsgemäßen Haftklebemasse ein Gemisch aus Blockcopolymeren mit einem Aufbau A-B, A-B-A, (A-B)₃X oder (A-B)₄X, das bevorzugt mindestens Diblockcopolymere A-B und/oder Triblockcopolymere A-B-A enthält.

Der Block A ist generell ein glasartiger Block mit einer Glasübergangstemperatur (Tg, DSC), die oberhalb der Raumtemperatur liegt. Erfindungsgemäß liegt die Tg des glasartigen Blockes bei mindestens 80 °C und bevorzugt bei mindestens 100 °C. Der Anteil an Vinylaromatenblöcken A an den gesamten Blockcopolymeren beträgt bevorzugt 10 bis 40 Gew.-%, besonders bevorzugt 20 bis 33 Gew.-%. Vinylaromaten zum Aufbau des Blocks A umfassen bevorzugt Styrol, α-Methylstyrol und/oder andere Styrol-Derivate. Der Block A kann somit als Homo- oder Copolymer vorliegen. Besonders bevorzugt ist der Block A ein Polystyrol.

Das Vinylaromatenblockcopolymer weist weiterhin generell einen gummiartigen Block B bzw. Weichblock mit einer bevorzugten Tg von kleiner als Raumtemperatur auf. Die Tg des Weichblocks ist besonders bevorzugt kleiner als 0 °C, insbesondere kleiner als -10 °C, beispielsweise kleiner als -40 °C und ganz besonders bevorzugt kleiner als -60 °C.

Bevorzugte konjugierte Diene als Monomere für den Weichblock B sind insbesondere ausgewählt aus der Gruppe bestehend aus Butadien, Isopren, Ethylbutadien, Phenylbutadien, Piperylen, Pentadien, Hexadien, Ethylhexadien, Dimethylbutadien und den Farnesen-Isomeren sowie beliebigen Mischungen dieser Monomere. Auch der Block B kann als Homopolymer oder als Copolymer vorliegen.

Besonders bevorzugt sind die konjugierten Diene als Monomere für den Weichblock B ausgewählt aus Butadien und Isopren. Beispielsweise ist der Weichblock B ein Polyisopren, ein Polybutadien oder ein teil- oder vollhydriertes Derivat eines dieser beiden Polymere wie insbesondere Polybutylenbutadien; oder ein Polymer aus einem Gemisch aus Butadien und Isopren. Ganz besonders bevorzugt ist der Block B ein Polybutadien.

Die erfindungsgemäße Haftklebemasse enthält darüber hinaus mindestens einen mit dem/den Poly(meth)acrylaten verträglichen Tackifier, der auch als Klebkraftverstärker oder Klebharz bezeichnet werden kann. Unter einem "Tackifier" wird entsprechend dem allgemeinem Fachmannverständnis ein oligomeres oder polymeres Harz verstanden, das die Autohäsion (den Tack, die Eigenklebrigkeit) der Haftklebemasse im Vergleich zu der keinen Tackifier enthaltenden, ansonsten aber identischen Haftklebemasse erhöht.

Unter einem "mit dem/den Poly(meth)acrylaten verträglichen Tackifier" wird ein Tackifier verstanden, der die Glasübergangstemperatur des nach gründlichem Mischen von Poly(meth)acrylat und Tackifier erhaltenen Systems im Vergleich zum reinen Poly(meth)acrylat verändert, wobei auch der Mischung aus Poly(meth)acrylat und Tackifier nur eine Tg zugeordnet werden kann. Ein nicht mit dem/den Poly(meth)acrylat(en) verträglicher Tackifier würde in dem nach gründlichem Mischen von Poly(meth)acrylat und Tackifier erhaltenen System zu zwei Tg führen, von denen eine dem Poly(meth)acrylat und die andere den Harz-Domänen zuzuordnen wäre. Die Bestimmung der Tg erfolgt in diesem Zusammenhang kalorimetrisch mittels DSC (differential scanning calorimetry).

Die Poly(meth)acrylat-verträglichen Harze der erfindungsgemäßen Zusammensetzung weisen bevorzugt einen DACP-Wert von weniger als 0 °C, sehr bevorzugt von höchstens -20 °C, und/oder bevorzugt einen MMAP-Wert von weniger als 40 °C, sehr bevorzugt von höchstens 20 °C, auf. Zur Bestimmung von DACP- und MMAP-Werten wird auf C. Donker, PSTC Annual Technical Seminar, Proceedings, S. 149-164, Mai 2001 verwiesen.

Erfindungsgemäß bevorzugt ist der mit den Poly(meth)acrylaten verträgliche Tackifier ein Terpenphenolharz oder ein Kolophoniumderivat, besonders bevorzugt ein Terpenphenolharz. Die erfindungsgemäße Haftklebemasse kann auch Mischungen mehrerer Tackifier enthalten. Unter den Kolophoniumderivaten sind Kolophoniumester bevorzugt.

Die erfindungsgemäße Haftklebemasse enthält bevorzugt 7 bis 25 Gew.-%, bezogen auf das Gesamtgewicht der Haftklebemasse, mindestens eines mit den Poly(meth)acrylaten verträglichen Tackifiers. Besonders bevorzugt ist der mit den Poly(meth)acrylaten verträgliche Tackifier bzw. sind mit den Poly(meth)acrylaten verträgliche Tackifier zu 12 bis 20 Gew.-%, bezogen auf das Gesamtgewicht der Haftklebemasse, enthalten.

Bevorzugt ist/sind der bzw. die mit den Poly(meth)acrylaten verträgliche(n) Tackifier der erfindungsgemäßen Haftklebemasse auch mit dem Synthesekautschuk, insbesondere mit dessen Weichblock B, verträglich oder zumindest teilverträglich, wobei die vorstehende Definition des Begriffs "verträglich" entsprechend gilt. Polymer/Harz-Verträglichkeit ist u. a. von der Molmasse der Polymere bzw. Harze abhängig. Die Verträglichkeit ist besser, wenn die Molmasse(n) niedriger liegen. Für ein gegebenes Polymer kann es möglich sein, dass die niedermolekularen Bestandteile der Harzmolmassenverteilung mit dem Polymer verträglich sind, die höhermolekularen aber nicht. Dies ist ein Beispiel für Teilverträglichkeit.

Das Gewichtsverhältnis von Poly(meth)acrylaten zu Synthesekautschuken in der erfindungsgemäßen Haftklebemasse beträgt bevorzugt von 1:1 bis 3:1, insbesondere von 1,8:1 bis 2,2:1.

Das Gewichtsverhältnis von mit den Poly(meth)acrylaten verträglichen Tackifieren zu Synthesekautschuken in der erfindungsgemäßen Haftklebemasse beträgt bevorzugt maximal 2:1, insbesondere maximal 1:1. Mindestens beträgt dieses Gewichtsverhältnis bevorzugt 1:4.

Besonders bevorzugt enthält die erfindungsgemäße Haftklebemasse
a) 50 - 60 Gew.-%, bezogen auf das Gesamtgewicht der Haftklebemasse, mindestens eines Poly(meth)acrylats;
b) 20 - 40 Gew.-%, bezogen auf das Gesamtgewicht der Haftklebemasse, mindestens eines Synthesekautschuks; und
c) 7 - 25 Gew.-% mindestens eines mit dem/den Poly(meth)acrylat(en) verträglichen Tackifiers.

Bevorzugt liegt der Synthesekautschuk in der erfindungsgemäßen Haftklebemasse im Poly(meth)acrylat dispergiert vor. Poly(meth)acrylat und Synthesekautschuk sind dementsprechend bevorzugt für sich jeweils homogene Phasen. Die in der Haftklebemasse enthaltenen Poly(meth)acrylate und Synthesekautschuke sind vorzugsweise so gewählt, dass sie bei 23 °C nicht bis zur Homogenität miteinander mischbar sind. Die erfindungsgemäße Haftklebemasse liegt somit zumindest mikroskopisch und zumindest bei Raumtemperatur bevorzugt in mindestens zweiphasiger Morphologie vor. Besonders bevorzugt sind Poly(meth)acrylat(e) und Synthesekautschuk(e) in einem Temperaturbereich von 0 °C bis 50 °C, insbesondere von -30 °C bis 80 °C nicht homogen miteinander mischbar, so dass die Haftklebemasse in diesen Temperaturbereichen zumindest mikroskopisch mindestens zweiphasig vorliegt.

Komponenten sind im Sinne dieser Schrift als dann "nicht homogen miteinander mischbar" definiert, wenn sich auch nach innigem Vermischen die Ausbildung zumindest zweier stabiler Phasen physikalisch und/oder chemisch zumindest mikroskopisch nachweisen lässt, wobei die eine Phase reich an der einen Komponente und die zweite Phase reich an der anderen Komponente ist. Ein Vorliegen vernachlässigbar geringer Mengen der einen Komponente in der anderen, das einer Ausbildung der Mehrphasigkeit nicht entgegensteht, wird dabei als unbeachtlich angesehen. So können in der Poly(meth)acrylatphase geringe Mengen an Synthesekautschuk und/oder in der Synthesekautschukphase geringe Mengen an Poly(meth)acrylat-Komponente vorliegen, sofern es sich nicht um wesentliche Mengen handelt, welche die Phasenseparation beeinflussen.

Die Phasentrennung kann insbesondere derart realisiert sein, dass diskrete Bereiche ("Domänen"), die reich an Synthesekautschuk sind - also im Wesentlichen aus Synthesekautschuk gebildet sind -, in einer kontinuierlichen Matrix, die reich an Poly(meth)acrylat ist - also im Wesentlichen aus Poly(meth)acrylat gebildet ist -, vorliegen. Ein geeignetes Analysesystem für eine Phasentrennung ist beispielweise die Raster-Elektronenmikroskopie. Phasenseparation kann sich aber beispielweise auch dadurch erkennen lassen, dass die unterschiedlichen Phasen zwei voneinander unabhängige Glasübergangstemperaturen bei der dynamischen Differenzkalorimetrie (DDK, DSC) aufweisen. Phasentrennung liegt erfindungsgemäß dann vor, wenn sie sich durch mindestens eine der Analysenmethoden eindeutig zeigen lässt.

Innerhalb der Synthesekautschuk-reichen Domänen kann als Feinstruktur zudem zusätzliche Mehrphasigkeit vorliegen, wobei die A-Blöcke eine Phase und die B-Blöcke eine zweite Phase bilden.

Die erfindungsgemäße Haftklebemasse kann über die bisher aufgeführten Bestandteile hinaus ein oder mehrere Kohlenwasserstoffharz(e) enthalten, die nicht mit dem Poly(meth)acrylat verträglich sind. Derartige Kohlenwasserstoffharze, die ebenfalls Tackifier sind, umfassen bevorzugt hydrierte Polymerisate des Dicyclopentadiens; nicht, partiell, selektiv oder vollständig hydrierte Kohlenwasserstoffharze auf Basis von C5-, C5/C9- oder C9-Monomerströmen und Polyterpenharze auf Basis von *α*-Pinen und/oder von *ß*-Pinen und/oder von *δ*-Limonen. Die Kohlenwasserstoffharze weisen bevorzugt einen DACP-Wert von mindestens 0 °C, sehr bevorzugt von mindestens 20 °C, und/oder bevorzugt einen MMAP-Wert von mindestens 40 °C, sehr bevorzugt von mindestens 60 °C, auf. Zur Bestimmung von DACP- und MMAP-Werten wird auf C. Donker, PSTC Annual Technical Seminar, Proceedings, S. 149-164, Mai 2001 verwiesen. Die vorgenannten Kohlenwasserstoffharze können sowohl einzeln als auch im Gemisch in der Haftklebemasse enthalten sein. Besonders bevorzugte Kohlenwasserstoffharze sind Polyterpenharze auf Basis von *α*-Pinen und/oder von *β*-Pinen und/oder von *δ*-Limonen.

Die erfindungsgemäße Haftklebemasse ist geschäumt. Die Schäumung kann mittels beliebiger chemischer und/oder physikalischer Methoden erfolgen. Bevorzugt wird eine geschäumte erfindungsgemäße Haftklebemasse jedoch durch das Einbringen und nachfolgende Expandieren von Mikroballons erhalten. Unter "Mikroballons" werden elastische und somit in ihrem Grundzustand expandierbare Mikrohohlkugeln verstanden, die eine thermoplastische Polymerhülle aufweisen. Diese Kugeln sind mit niedrigsiedenden Flüssigkeiten oder verflüssigtem Gas gefüllt. Als Hüllenmaterial finden insbesondere Polyacrylnitril, PVDC, PVC oder Polyacrylate Verwendung. Als niedrigsiedende Flüssigkeit sind insbesondere Kohlenwasserstoffe der niederen Alkane, beispielsweise Isobutan oder Isopentan geeignet, die als verflüssigtes Gas unter Druck in der Polymerhülle eingeschlossen sind.

Durch ein Einwirken auf die Mikroballons, insbesondere durch eine Wärmeeinwirkung, erweicht die äußere Polymerhülle. Gleichzeitig geht das in der Hülle befindliche flüssige Treibgas in seinen gasförmigen Zustand über. Dabei dehnen sich die Mikroballons irreversibel aus und expandieren dreidimensional. Die Expansion ist beendet, wenn sich der Innen- und der Außendruck ausgleichen. Da die polymere Hülle erhalten bleibt, erzielt man so einen geschlossenzelligen Schaum.

Wird mittels Mikroballons geschäumt, dann können die Mikroballons als Batch, Paste oder als unverschnittenes oder verschnittenes Pulver der Formulierung zugeführt werden. Dosierpunkte sind beispielsweise vor oder nach dem Zugabepunkt des Poly(meth)acrylats denkbar, etwa gemeinsam als Pulver mit dem Synthesekautschuk oder als Paste zu einem späteren Zeitpunkt.

Es ist eine Vielzahl an Mikroballontypen kommerziell erhältlich, welche sich im Wesentlichen über ihre Größe (6 bis 45 µm Durchmesser im unexpandierten Zustand) und ihre zur Expansion benötigten Starttemperaturen (75 bis 220°C) differenzieren. Ein Beispiel für kommerziell erhältliche Mikroballons sind die Expancel^{®} DU-Typen (DU = dry unexpanded) von der Firma Akzo Nobel. Unexpandierte Mikroballontypen sind auch als wässrige Dispersion mit einem Feststoff- beziehungsweise Mikroballonanteil von ca. 40 bis 45 Gew.-% erhältlich, weiterhin auch als polymergebundende Mikroballons (Masterbatche), zum Beispiel in Ethylvinylacetat mit einer Mikroballonkonzentration von ca. 65 Gew.-%. Sowohl die Mikroballon-Dispersionen als auch die Masterbatche sind wie die DU-Typen zur Herstellung einer geschäumten erfindungsgemäßen Haftklebemasse geeignet.

Eine geschäumte erfindungsgemäße Haftklebemasse kann auch mit sogenannten vorexpandierten Mikroballons erzeugt werden. Bei dieser Gruppe findet die Expansion schon vor der Einmischung in die Polymermatrix statt. Vorexpandierte Mikroballons sind beispielsweise unter der Bezeichnung Dualite^{®} oder mit der Typenbezeichnung DE (Dry Expanded) kommerziell erhältlich.

Die Dichte einer geschäumten erfindungsgemäßen Haftklebemasse beträgt bevorzugt 200 bis 1000 kg/m³, stärker bevorzugt 300 bis 900 kg/m³, insbesondere 400 bis 800 kg/m³.

Je nach Anwendungsgebiet und gewünschten Eigenschaften der erfindungsgemäßen Haftklebemasse können dieser weitere Komponenten und/oder Additive zugesetzt sein, und zwar jeweils allein oder in Kombination mit einem oder mehreren anderen Additiven oder Komponenten.

So kann die erfindungsgemäße Haftklebemasse beispielsweise Pulver- und granulatförmige, insbesondere auch abrasive und verstärkende, Füllstoffe, Farbstoffe und Pigmente wie z. B. Kreiden (CaCOs), Titandioxid, Zinkoxide und/oder Ruße, enthalten. Bevorzugt enthält die Haftklebemasse eine oder mehrere Kreideform(en) als Füllstoff, besonders bevorzugt Mikrosöhl-Kreide (Fa. Söhlde). Bei bevorzugten Anteilen bis zu 20 Gew.-% verändern sich die klebtechnischen Eigenschaften (Scherfestigkeit bei Raumtemperatur, Sofortklebkraft auf Stahl und PE) durch den Füllstoffzusatz praktisch nicht. Darüber hinaus können verschiedene organische Füllstoffe enthalten sein.

Geeignete Additive für die erfindungsgemäße Haftklebemasse sind außerdem - unabhängig gewählt von anderen Additiven - nicht expandierbare Polymerhohlkugeln, Polymervollkugeln, Glashohlkugeln, Glasvollkugeln, keramische Hohlkugeln, keramische Vollkugeln und/oder Kohlenstoffvollkugeln ("Carbon Micro Balloons").

Weiterhin kann die erfindungsgemäße Haftklebemasse schwerentflammbare Füllstoffe, beispielsweise Ammoniumpolyphosphat; elektrisch leitfähige Füllstoffe, beispielsweise Leitruß, Kohlenstofffasern und/oder silberbeschichtete Kugeln; thermisch leitfähige Materialien wie beispielsweise Bornitrid, Aluminiumoxid, Siliciumcarbid; ferromagnetische Additive, beispielsweise Eisen-(III)-Oxide; organische, nachwachsende Rohstoffe wie beispielsweise Holzmehl, organische und/oder anorganische Nanopartikel, Fasern; Compoundierungsmittel, Alterungsschutzmittel, Lichtschutzmittel und/oder Ozonschutzmittel enthalten.

Optional können Weichmacher enthalten sein. Als Weichmacher können z.B. (Meth)Acrylat-Oligomere, Phthalate, Cyclohexandicarbonsäureester, wasserlösliche Weichmacher, Weichharze, Phosphate oder Polyphosphate zudosiert werden.

Die Beigabe von Kieselsäuren, vorteilhaft von gefällter, mit Dimethyldichlorsilan oberflächenmodifizierter Kieselsäure, kann genutzt werden, um die Wärmescherfestigkeit der Haftklebemasse einzustellen.

Ein Verfahren zur Herstellung einer erfindungsgemäßen Haftklebemasse kann zunächst eine Aufkonzentration der aus der Polymerherstellung resultierenden Polyacrylat-Lösung oder -Dispersion umfassen. Die Aufkonzentration des Polymerisats kann in Abwesenheit von Vernetzer- und Beschleunigersubstanzen geschehen. Es ist aber auch möglich, maximal eine dieser Substanzen dem Polymerisat bereits vor der Aufkonzentration zuzusetzen, so dass die Aufkonzentration dann in Gegenwart dieser Substanz(en) erfolgt.

Der Synthesekautschuk kann zusammen mit dem Poly(meth)acrylat-verträglichen Harz über einen Feststoffdosierer in einen Compounder gegeben werden. Über einen Sidefeeder kann das aufkonzentrierte und ggf. schon aufgeschmolzene Poly(meth)acrylat in den Compounder eingebracht werden. In besonderen Ausführungen des Verfahrens ist es auch möglich, dass Aufkonzentration und Compoundierung im selben Reaktor stattfinden. Die Poly(meth)acrylat-verträglichen Harze können auch über eine Harzschmelze und einen weiteren Sidefeeder an anderer Verfahrensposition, z. B. nach Eingabe von Synthesekautschuk und Poly(meth)acrylat, zugeführt werden.

Weitere Additive und/oder Weichmacher können ebenfalls als Feststoffe oder Schmelze oder auch als Batch in Kombination mit einer anderen Formulierungskomponente zugeführt werden.

Insbesondere kann als Compounder ein Extruder eingesetzt werden. Die Polymere liegen im Compounder bevorzugt in der Schmelze vor, entweder weil sie bereits im Schmelzezustand eingegeben werden oder indem sie im Compounder bis zur Schmelze erhitzt werden. Vorteilhafterweise werden die Polymerisate im Compounder durch Beheizung in der Schmelze gehalten.

Sofern Beschleunigersubstanzen für die Vernetzung des Poly(meth)acrylats eingesetzt werden, werden diese den Polymerisaten bevorzugt erst kurz vor der Weiterverarbeitung, insbesondere einer Beschichtung oder anderweitigen Ausformung, zugesetzt. Das Zeitfenster der Zugabe vor der Beschichtung richtet sich insbesondere nach der zur Verfügung stehenden Topfzeit, also der Verarbeitungszeit in der Schmelze, ohne dass die Eigenschaften des resultierenden Produktes nachteilig verändert werden.

Die Vernetzer, erfindungsgemäß Epoxide, und die Beschleuniger können auch beide kurz vor der Weiterverarbeitung der Zusammensetzung zugesetzt werden, also vorteilhaft in der Phase, wie sie vorstehend für die Beschleuniger dargestellt ist. Hierzu ist es vorteilhaft, wenn Vernetzer und Beschleuniger an ein- und derselben Stelle gleichzeitig in den Prozess eingebracht werden, gegebenenfalls als Epoxid-Beschleuniger-Abmischung. Grundsätzlich ist es auch möglich, die Zugabezeitpunkte bzw. Zugabestellen für Vernetzer und Beschleuniger in den oben dargestellten Ausführungen zu vertauschen, so dass der Beschleuniger vor den Vernetzersubstanzen zugesetzt werden kann.

Nach der Compoundierung der Masse kann ihre Weiterverarbeitung, insbesondere die Beschichtung auf einen permanenten oder auf einen temporären Träger, erfolgen. Ein permanenter Träger bleibt bei der Anwendung mit der Klebemassenschicht verbunden, während der temporäre Träger in dem weiteren Verarbeitungsprozess, zum Beispiel der Konfektionierung des Klebebandes, oder bei der Anwendung von der Klebemassenschicht entfernt wird.

Die Beschichtung der Selbstklebemassen kann mit dem Fachmann bekannten Hotmelt-Beschichtungsdüsen oder bevorzugt mit Walzenauftragswerken, auch Beschichtungskalander genannt, erfolgen. Die Beschichtungskalander können vorteilhaft aus zwei, drei, vier oder mehr Walzen bestehen.

Bevorzugt ist zumindest eine der Walzen mit einer anti-adhäsiven Walzenoberfläche versehen. Bevorzugt sind alle Walzen des Kalanders, die mit der Haftklebemasse in Berührung kommen, anti-adhäsiv ausgerüstet. Als anti-adhäsive Walzenoberfläche wird bevorzugt ein Stahl-Keramik-Silikon-Verbundwerkstoff eingesetzt. Derartige Walzenoberflächen sind gegen thermische und mechanische Belastungen resistent.

Es hat sich als besonders vorteilhaft herausgestellt, wenn Walzenoberflächen eingesetzt werden, die eine Oberflächenstruktur aufweisen, insbesondere in der Art, dass die Fläche keinen vollständigen Kontakt zur zu verarbeitenden Masseschicht herstellt, sondern dass die Kontaktfläche - verglichen mit einer glatten Walze - geringer ist. Besonders günstig sind strukturierte Walzen wie Metall-Rasterwalzen, beispielsweise Stahlrasterwalzen.

Ein weiterer Gegenstand der Erfindung ist ein Klebeband, das mindestens eine Schicht einer erfindungsgemäßen Haftklebemasse enthält. Die erfindungsgemäßen Haftklebemassen eignen sich besonders für die Ausbildung hoher Schichtdicken. Die Dicke der vorstehenden Schicht einer erfindungsgemäßen Haftklebemasse beträgt daher bevorzugt 100 µm bis 5000 µm, besonders bevorzugt 150 µm bis 3000 µm, insbesondere 200 µm bis 2500 µm, beispielsweise 500 µm bis 2000 µm.

Bevorzugt besteht das erfindungsgemäße Klebeband aus einer Schicht einer erfindungsgemäßen Haftklebemasse. In diesem Fall handelt es sich also um ein sogenanntes Transferklebeband. Die Haftklebemasse kann aber auch als Trägerschicht eines ein- oder doppelseitigen Klebebands vorliegen oder mindestens eine der haftklebrigen äußeren Schichten eines trägerhaltigen ein- oder doppelseitigen Klebebands bilden. Ein Releaseliner, wie er üblicherweise zum (temporären) Schutz von Haftklebemassen auf diesen aufgebracht wird, wird vorliegend nicht als Bestandteil eines Klebebands angesehen. Dementsprechend kann das erfindungsgemäße Klebeband lediglich aus einer Schicht einer erfindungsgemäßen Haftklebemasse bestehen, auch wenn diese mit einem Releaseliner abgedeckt ist.

### Beispiele

### Prüfmethoden

### Test 1: Klebkraft Stahl 90°

Die Bestimmung der Klebkraft auf Stahl erfolgte bei einem Prüfklima von 23 °C +/- 1 °C Temperatur und 50 % +/- 5 % rel. Luftfeuchte. Die Muster wurden auf 20 mm Breite zugeschnitten und auf eine Stahlplatte geklebt. Die Prüfplatte wurde vor der Messung gereinigt und konditioniert. Dazu wurde die Stahlplatte zunächst mit Aceton abgewischt und danach 5 Minuten an der Luft liegen gelassen, damit das Lösungsmittel abdampfen konnte. Die dem Prüfuntergrund abgewandte Seite des einschichtigen Klebebands wurde dann mit 36 µm geätzter PET-Folie abgedeckt, wodurch verhindert wurde, dass sich das Muster bei der Messung dehnt. Danach erfolgte das Anrollen des Prüfmusters auf den Stahluntergrund. Hierzu wurde das Tape mit einer 4 kg - Rolle fünfmal hin und her mit einer Aufrollgeschwindigkeit von 10 m/min überrollt. 20 min nach dem Anrollen wurde die Stahlplatte in eine spezielle Halterung geschoben, die es ermöglicht, das Muster in einem Winkel von 90 ° senkrecht nach oben abzuziehen. Die Klebkraftmessung erfolgte mit einer Zwick-Zugprüfmaschine. Die Messergebnisse sind in N/cm angegeben und sind gemittelt aus drei Einzelmessungen.

Als gute Werte sind Klebkräfte ab 15 N/cm anzusehen, bevorzugt werden Werte ab 20 N/cm. Als sehr gut sind Werte ab 25 N/cm anzusehen.

### Test 2: statischer Schertest bei 70°C

Ein Transferklebeband mit den Maßen 13 x 20 mm wurde zwischen zwei gereinigte Stahlplatten verklebt. Die Verklebung wurde eine Minute lang mit 0,260 kN angedrückt. Nach einer Lagerung von 3 d wurde der Verbund an einem Schertestmessplatz, der mit einem Wärmeschrank kombiniert ist, aufgehängt. Die Belastung erfolgte mit 5 N. Der Test galt als beendet, wenn die Verklebung versagte oder die vorgegebene Prüfzeit abgelaufen war. Das Ergebnis wird in min angegeben und ist der Mittelwert aus 3 Einzelmessungen.

Als gute Werte sind Zeiten ab 200 min anzusehen, bevorzugt werden Werte ab 1000 min. Als sehr gut sind Werte ab 5000 min anzusehen.

### Test 3: dynamischer L-jig bei Raumtemperatur und -30 °C

Mit folgender Methode wurde die Ablösekraft von doppelseitigen Klebebändern bei einseitiger Kantenbelastung ermittelt. Ein L-förmiger Stahlblechwinkel (L-jig) wurde mit einem quadratisch zugeschnittenen Prüfmuster (25 mm Kantenlänge) auf einer gereinigten und konditionierten ABS-Platte verklebt. Der Verbund wurde 5 Sekunden mit 60 N angedrückt. Nach einer Aufziehzeit von 24 h bei 23 °C und 50 % rel. Luftfeuchte wurde der L-jig mit einer Zugprüfmaschine bei einer Geschwindigkeit von 300 mm/min abgezogen. Für die Prüftemperatur von -30 °C wurde die Zugprüfmaschine mit einer geeigneten Klimakammer umhüllt. Die Prüfkörper wurden mindestens 30 min bei -30 °C temperiert, bevor die Messung durchgeführt wurde.

Das Ergebnis ist der Mittelwert aus 3 Einzelmessungen.

Als gute Werte werden sowohl bei Raumtemperatur als auch bei -30 °C Kräfte ab 60 N/cm angesehen, bevorzugt werden Werte ab 75 N/cm. Als sehr gut sind Werte ab 100 N/cm anzusehen.

### Herstellung Polyacrylat-Basispolymer:

Ein für radikalische Polymerisationen konventioneller Reaktor wurde mit 72,0 kg 2-Ethylhexylacrylat, 20,0 kg Methylacrylat, 8,0 kg Acrylsäure und 66,6 kg Aceton/ Isopropanol (94:6) befüllt. Nach 45minütiger Durchleitung von Stickstoffgas unter Rühren wurde der Reaktor auf 58 °C hochgeheizt und 50 g AIBN, gelöst in 500 g Aceton, hinzugegeben. Anschließend wurde das äußere Heizbad auf 75 °C erwärmt und die Reaktion konstant bei dieser Außentemperatur durchgeführt. Nach 1 h wurden erneut 50 g AIBN, gelöst in 500 g Aceton, zugegeben, und nach 4 h wurde mit 10 kg Aceton/Isopropanol-Gemisch (94:6) verdünnt.

Nach 5 h sowie nach 7 h wurde jeweils mit 150 g Bis-(4-tert-butylcyclohexyl)-peroxydicarbonat, jeweils gelöst in 500 g Aceton, nachinitiiert. Nach 22 h Reaktionszeit wurde die Polymerisation abgebrochen und auf Raumtemperatur abgekühlt. Das Produkt hatte einen Feststoffgehalt von 55,8 % und wurde getrocknet. Das resultierende Polyacrylat hatte einen K-Wert von 58,9, ein mittleres Molekulargewicht von Mw = 748.000 g/mol, eine Polydispersität von D (Mw/Mn) - 8,9 und eine statische Glasübergangstemperatur von Tg = - 35,2 °C.

### Beispiel 1:

In einem Planetwalzenextruder wurde über einen Feststoffdosierer der Synthesekautschuk Kraton D1118 als Granulat aufgeschmolzen. Es folgte die Zugabe einer Mikroballonpaste (50 % Expancel 051DU40 in Ethomeen C25). Über einen Sidefeeder wurde das Polyacrylat-Basispolymer zugeführt, das in einem Einschneckenextruder vorgeschmolzen wurde, und ein Terpenphenolharz (Dertophen DT105) zudosiert. Der Mischung wurden Vernetzer- (Polypox R16 15 % in Rheofos RDP) und Beschleuniger- (15 % Epicure 925 in Rheofos RDP) Lösung zugegeben. Die Schmelze wurde durchmischt und über einen Zweiwalzenkalander zwischen zwei Trennfolien (silikonisierte PET-Folie) beschichtet. Es resultierte ein einschichtiges Klebeband mit einer Schichtdicke von 1000 µm und einer Dichte von 550 kg/m³. Die Zusammensetzung lag bei 48 % Polyacrylat, 25 % Kraton D1118, 18 % Dertophen DT105, 4 % Vernetzer-/Beschleuniger-Lösung (Vernetzer:Beschleuniger = 1:1), 5 % Mikroballonpaste (Angaben in Gew.-%).

### Beispiel 2:

In einem Planetwalzenextruder wurde über einen Feststoffdosierer der Synthesekautschuk Kraton D1118 als Granulat aufgeschmolzen. Über einen Sidefeeder wurde das Polyacrylat-Basispolymer zugeführt, das in einem Einschneckenextruder vorgeschmolzen wurde. Anschließend wurde ein Terpenphenolharz (Dertophen DT105) zudosiert. Die Mischung wurde in einen Doppelschneckenextruder überführt und dort mit einer Vernetzer- (Polypox R16 30 % in Rheofos RDP) und Beschleuniger- (30 % Epicure 925 in Rheofos RDP) Lösung versetzt. Es folgte die Zugabe einer Mikroballonpaste (50 % Expancel 051DU40 in Ethomeen C25). Die Schmelze wurde durchmischt und über einen Zweiwalzenkalander zwischen zwei Trennfolien (silikonisierte PET-Folie) beschichtet. Es resultierte ein einschichtiges Klebeband mit einer Schichtdicke von 1200 µm und einer Dichte von 730 kg/m³. Die Zusammensetzung lag bei 41 % Polyacrylat, 35 % Kraton D1118, 15 % Dertophen DT105, 4 % Vernetzer-/Beschleuniger-Lösung (Vernetzer:Beschleuniger = 1:1), 5 % Mikroballonpaste (Angaben in Gew.-%).

### Beispiel 3:

Es wurde analog Beispiel 1 vorgegangen. Es resultierte ein einschichtiges Klebeband mit einer Schichtdicke von 1000 µm und einer Dichte von 540 kg/m³. Die Zusammensetzung lag bei 53 % Polyacrylat, 23 % Kraton D1118, 15 % Dertophen T105, 4 % Vernetzer-/Beschleuniger-Lösung (Vernetzer:Beschleuniger = 1:1), 5 % Mikroballonpaste (Angaben in Gew.-%).

### Beispiel 4:

Es wurde analog Beispiel 1 vorgegangen. Es resultierte ein einschichtiges Klebeband mit einer Schichtdicke von 1000 µm und einer Dichte von 570 kg/m³. Die Zusammensetzung lag bei 45,5 % Polyacrylat, 28 % Kraton D1102, 15 % Dertophen T105, 2,5 % Piccolyte A115, 4 % Vernetzer-/Beschleuniger-Lösung (Vernetzer:Beschleuniger = 1:1), 5 % Mikroballonpaste (Angaben in Gew.-%).

### Beispiel 5:

Es wurde analog Beispiel 1 vorgegangen. Es resultierte ein einschichtiges Klebeband mit einer Schichtdicke von 1000 µm und einer Dichte von 570 kg/m³. Die Zusammensetzung lag bei 48 % Polyacrylat, 28 % Kraton D1118, 7,5 % Dertophen T105, 7,5 % Piccolyte A115, 4 % Vernetzer-/Beschleuniger-Lösung (Vernetzer:Beschleuniger = 1:1), 5 % Mikroballonpaste (Angaben in Gew.-%).

### Beispiel 6:

Es wurde analog Beispiel 2 vorgegangen. Es resultierte ein einschichtiges Klebeband mit einer Schichtdicke von 1000 µm und einer Dichte von 750 kg/m³. Die Zusammensetzung lag bei 43 % Polyacrylat, 28 % Kraton D1118, 20 % Dertophen T105, 4 % Vernetzer-/Beschleuniger-Lösung (Vernetzer:Beschleuniger = 1:1), 5 % Mikroballonpaste (Angaben in Gew.-%).

### Beispiel 7:

Es wurde analog Beispiel 1 vorgegangen. Es resultierte ein einschichtiges Klebeband mit einer Schichtdicke von 1000 µm und einer Dichte von 570 kg/m³. Die Zusammensetzung lag bei 45,5 % Polyacrylat, 28 % Kraton D1102, 17,5 % Dertophen T105, 4 % Vernetzer-/Beschleuniger-Lösung (Vernetzer:Beschleuniger = 1:1), 5 % Mikroballonpaste (Angaben in Gew.-%).

### Vergleichsbeispiel 1:

In einen Planetwalzenextruder wurde über einen Sidefeeder das Polyacrylat-Basispolymer zugeführt, das in einem Einschneckenextruder vorgeschmolzen wurde. Anschließend wurde ein Terpenphenolharz (Dertophen DT110) zudosiert. Die Mischung wurde in einen Doppelschneckenextruder überführt und dort mit Vernetzer- und Beschleunigerkomponenten (Polypox R16/ Epicure 925) versetzt. Es folgte die Zugabe einer Mikroballonpaste (50 % Expancel 051DU40 in Ethomeen C25). Die Schmelze wurde über einen Zweiwalzenkalander zwischen zwei Trennfolien (silikonisierte PET-Folie) beschichtet. Es resultierte ein einschichtiges Klebeband mit einer Schichtdicke von 1200 µm und einer Dichte von 870 kg/m³. Die Zusammensetzung lag bei 71 % Polyacrylat, 29 % Dertophen DT110, 0,3 % Vernetzer-/Beschleuniger, 2 % Mikroballonpaste (Angaben in Gew.-%).

### Vergleichsbeispiel 2:

Es wurde analog Beispiel 1 vorgegangen. Es resultierte ein einschichtiges Klebeband mit einer Schichtdicke von 1000 µm und einer Dichte von 600 kg/m³. Die Zusammensetzung lag bei 48,5 % Polyacrylat, 7,5 % Kraton D1118, 16 % Dertophen T105, 19 % Piccolyte A115, 4 % Vernetzer-/Beschleuniger-Lösung (Vernetzer:Beschleuniger = 1:1), 5 % Mikroballonpaste (Angaben in Gew.-%).

### Vergleichsbeispiel 3:

Es wurde analog Beispiel 1 vorgegangen. Es resultierte ein einschichtiges Klebeband mit einer Schichtdicke von 1000 µm und einer Dichte von 650 kg/m³. Die Zusammensetzung lag bei 49 % Acrylat, 27 % Kraton D1118, 15 % Piccolyte A115, 4 % Vernetzer-/Beschleuniger-Lösung (Vernetzer:Beschleuniger = 1:1), 5 % Mikroballonpaste (Angaben in Gew.-%).

**Tabelle 1: Testergebnisse**

| | Klebkraft (Stahl, 90 °) | L-jig (Raumtemperatur) | L-jig (-30 °C) | Statischer Schertest (5 N, 70 °C) |
|---|---|---|---|---|
| Beispiel 1 | 28 N/cm | 89 N/cm | 96 N/cm | > 5000 min |
| Beispiel 2 | 29 N/cm | 75 N/cm | 91 N/cm | > 5000 min |
| Beispiel 3 | 30 N/cm | 93 N/cm | 91 N/cm | 2355 min |
| Beispiel 4 | 18 N/cm | 107 N/cm | 148 N/cm | 250 min |
| Beispiel 5 | 30 N/cm | 75 N/cm | 106 N/cm | > 5000 min |
| Beispiel 6 | 27 N/cm | 95 N/cm | 62 N/cm | 1150 min |
| Beispiel 7 | 18 N/cm | 79 N/cm | 79 N/cm | 455 min |
| Vergleichsbeispiel 1 | 31 N/cm | 137 N/cm | 7 N/cm | 114 min |
| Vergleichsbeispiel 2 | 35 N/cm | 125 N/cm | 22 N/cm | 31 min |
| Vergleichsbeispiel 3 | 23 N/cm | 73 N/cm | 54 N/cm | > 5000 min |

## Patentansprüche

1. Haftklebemasse, enthaltend:
a) 40 - 70 Gew.-%, bezogen auf das Gesamtgewicht der Haftklebemasse, mindestens eines Poly(meth)acrylats;
b) 15 - 50 Gew.-%, bezogen auf das Gesamtgewicht der Haftklebemasse, mindestens eines Synthesekautschuks; und
c) mindestens einen mit dem/den Poly(meth)acrylat(en) verträglichen Tackifier,
**dadurch gekennzeichnet, dass** die Haftklebemasse geschäumt ist,
dass das mindestens eine Poly(meth)acrylat eine Glasübergangstemperatur (DSC) zwischen -20 und -50 °C aufweist, wobei die Glasübergangtemperatur des Poly(meth)acrylats gemäß der Beschreibung bestimmt wird,
dass der Synthesekautschuk ein Blockcopolymer mit einem Aufbau A-B, A-B-A, (A-B)ₙ, (A-B)ₙX oder (A-B-A)ₙX ist, worin
- die Blöcke A unabhängig voneinander für ein Polymer, gebildet durch Polymerisation mindestens eines Vinylaromaten;
- die Blöcke B unabhängig voneinander für ein Polymer, gebildet durch Polymerisation von konjugierten Dienen mit 4 bis 18 C-Atomen und/oder Isobutylen, oder für ein teil- oder vollhydriertes Derivat eines solchen Polymers;
- X für den Rest eines Kopplungsreagenzes oder Initiators und
- n für eine ganze Zahl ≥ 2 stehen, und
dass die Blöcke A glasartige Blöcke mit einer Glasübergangstemperatur (DSC) sind, die bei mindestens 80 °C liegt;
dass die Monomere zur Herstellung des Poly(meth)acrylats anteilig funktionelle Gruppen enthalten, die geeignet sind, mit Epoxidgruppen Verknüpfungsreaktionen einzugehen und
das Poly(meth)acrylat mittels einer oder mehrerer epoxidgruppenhaltiger Substanzen vernetzt ist.

2. Haftklebemasse gemäß Anspruch 1, **dadurch gekennzeichnet, dass** das Gewichtsverhältnis von Poly(meth)acrylaten zu Synthesekautschuken von 1:1 bis 3:1 beträgt.

3. Haftklebemasse gemäß mindestens einem der vorstehenden Ansprüche, **dadurch gekennzeichnet, dass** das Gewichtsverhältnis von mit den Poly(meth)acrylaten verträglichen Tackifiern zu Synthesekautschuken maximal 2:1 beträgt.

4. Haftklebemasse gemäß mindestens einem der vorstehenden Ansprüche, **dadurch gekennzeichnet, dass** das Gewichtsverhältnis von mit den Poly(meth)acrylaten verträglichen Tackifiern zu Synthesekautschuken mindestens 1:4 beträgt.

5. Haftklebemasse gemäß mindestens einem der vorstehenden Ansprüche, **dadurch gekennzeichnet, dass** der Gewichtsanteil der Blöcke A, bezogen auf sämtliche in der Haftklebemasse enthaltenen Blockcopolymere, 10 bis 40 Gew.-% beträgt.

6. Haftklebemasse gemäß mindestens einem der vorstehenden Ansprüche, **dadurch gekennzeichnet, dass** der mit den Poly(meth)acrylaten verträgliche Tackifier ein Terpenphenolharz oder ein Kolophoniumderivat ist.

7. Klebeband, enthaltend mindestens eine Schicht einer Haftklebemasse gemäß mindestens einem der vorstehenden Ansprüche.

8. Klebeband gemäß Anspruch 7, **dadurch gekennzeichnet, dass** die Dicke der Schicht 100 µm bis 5000 µm beträgt.

9. Klebeband gemäß mindestens einem der Ansprüche 7 und 8, **dadurch gekennzeichnet, dass** das Klebeband aus einer Schicht einer Haftklebemasse gemäß mindestens einem der Ansprüche 1 bis 6 besteht.

## Claims

1. Pressure-sensitive adhesive comprising:
a) 40 - 70 wt%, based on the total weight of the adhesive, of at least one poly(meth)acrylate;
b) 15 - 50 wt%, based on the total weight of the adhesive, of at least one synthetic rubber; and
c) at least one tackifier compatible with the poly(meth)acrylate(s),
**characterized in that** the pressure-sensitive adhesive is foamed,
**in that** the at least one poly(meth)acrylate has a glass transition temperature (DSC) of between -20 and -50°C, wherein the glass transition temperature of the poly(meth)acrylate is determined according to the description,
**in that** the synthetic rubber is a block copolymer having an A-B, A-B-A, (A-B)ₙ, (A-B)ₙX or (A-B-A)ₙX construction, in which
- the blocks A independently of one another are a polymer formed by polymerization of at least one vinylaromatic;
- the blocks B independently of one another are a polymer formed by polymerization of conjugated dienes having 4 to 18 C atoms and/or isobutylene, or are a partially or fully hydrogenated derivative of such a polymer;
- X is the residue of a coupling reagent or initiator and
- n is an integer ≥ 2, and
**in that** the blocks A are glasslike blocks having a glass transition temperature (DSC) which is at least 80°C;
**in that** the monomers for preparing the poly(meth)acrylate include proportionally functional groups suitable for entering into linking reactions with epoxide groups and
the poly(meth)acrylate is crosslinked by means of one or more substances containing epoxide groups.

2. Pressure-sensitive adhesive according to Claim 1, **characterized in that** the weight ratio of poly(meth)acrylates to synthetic rubbers is from 1:1 to 3:1.

3. Pressure-sensitive adhesive according to at least one of the preceding claims, **characterized in that** the weight ratio of tackifiers compatible with the poly(meth)acrylates to synthetic rubbers is at most 2:1.

4. Pressure-sensitive adhesive according to at least one of the preceding claims, **characterized in that** the weight ratio of tackifiers compatible with the poly(meth)acrylates to the synthetic rubbers is at least 1:4.

5. Pressure-sensitive adhesive according to at least one of the preceding claims, **characterized in that** the weight fraction of the blocks A, based on all block copolymers present in the adhesive, is 10 to 40 wt%.

6. Pressure-sensitive adhesive according to at least one of the preceding claims, **characterized in that** the tackifier compatible with the poly(meth)acrylates is a terpene-phenolic resin or a rosin derivative.

7. Adhesive tape comprising at least one layer of a pressure-sensitive adhesive according to at least one of the preceding claims.

8. Adhesive tape according to Claim 7, **characterized in that** the thickness of the layer is 100 µm to 5000 µm.

9. Adhesive tape according to at least one of Claims 7 and 8, **characterized in that** the adhesive tape consists of a layer of a pressure-sensitive adhesive according to at least one of Claims 1 to 6.

## Revendications

1. Masse autoadhésive contenant :
a) 40 à 70 % en poids, par rapport au poids total de la masse autoadhésive, d'au moins un poly(méth)acrylate ;
b) 15 à 50 % en poids, par rapport au poids total de la masse autoadhésive, d'au moins un caoutchouc synthétique ; et
c) au moins un agent tackifiant compatible avec le(s) poly(méth)acrylate(s) ;
**caractérisé en ce que** la masse autoadhésive est moussée, **en ce que** l'au moins un poly(méth)acrylate présente une température de transition vitreuse (DSC) entre -20 et -50 °C, la température de transition vitreuse du poly(méth)acrylate étant déterminée selon la description, **en ce que** le caoutchouc synthétique est un copolymère séquencé de structure A-B, A-B-A, (A-B)ₙ, (A-B)ₙX ou (A-B-A)ₙX, dans laquelle
- les blocs A, indépendamment les uns des autres, représentent un polymère formé par polymérisation d'au moins un composé vinylaromatique ;
- les blocs B, indépendamment les uns des autres, représentent un polymère formé par polymérisation de diènes conjugués comportant 4 à 18 atomes de C et/ou d'isobutylène, ou un dérivé partiellement ou entièrement hydrogéné d'un tel polymère ;
- X représente le radical d'un réactif de couplage ou d'un initiateur et
- n représente un nombre entier ≥ 2, et
**en ce que** les blocs A sont des blocs vitreux présentant une température de transition vitreuse (DSC) d'au moins 80 °C ;
**en ce que** les monomères pour la préparation du poly(méth)acrylate contiennent en partie des groupes fonctionnels qui sont aptes à réagir avec des groupes époxyde pour former des liaisons et
le poly(méth)acrylate est réticulé au moyen d'une ou plusieurs substances contenant des groupes époxyde.

2. Masse autoadhésive selon la revendication 1, **caractérisé en ce que** le rapport pondéral entre les poly(méth)acrylates sur les caoutchoucs synthétiques est de 1 : 1 à 3 : 1.

3. Masse autoadhésive selon l'une quelconque des revendications précédentes, **caractérisé en ce que** le rapport pondéral entre les agents tackifiants compatibles avec les poly(méth)acrylates sur les caoutchoucs synthétiques est de 2 : 1 au maximum.

4. Masse autoadhésive selon au moins l'une quelconque des revendications précédentes, **caractérisé en ce que** le rapport pondéral entre les agents tackifiants compatibles avec les poly(méth)acrylates sur les caoutchoucs synthétiques est d'au moins 1 : 4.

5. Masse autoadhésive selon au moins l'une quelconque des revendications précédentes, **caractérisé en ce que** le rapport pondéral des blocs A, par rapport à l'ensemble des copolymères séquencés contenus dans la masse autoadhésive, est de 10 à 40 % en poids.

6. Masse autoadhésive selon au moins l'une quelconque des revendications précédentes, **caractérisé en ce que** l'agent tackifiant compatible avec les poly(méth)acrylates est une résine terpènephénolique ou un dérivé de colophane.

7. Ruban adhésif contenant au moins une couche d'une masse autoadhésive selon au moins l'une quelconque des revendications précédentes.

8. Ruban adhésif selon la revendication 7, **caractérisé en ce que** l'épaisseur de la couche est de 100 µm à 5 000 µm.

9. Ruban adhésif selon au moins l'une des revendications 7 et 8, **caractérisé en ce que** le ruban adhésif est constitué d'une couche d'une masse autoadhésive selon au moins l'une quelconque des revendications 1 à 6.
